# EUROPEAN PATENT APPLICATION

(11) **EP 1 752 995 A1**
(43) Date of publication of application: **14.02.2007**
(21) Application number: 05257365.6
(22) Date of filing: 30.11.2005
(51) Int. Cl.: H01F 10/16, H01F 10/30, H01F 41/18, G11B 5/31

(54) **Magnetic film for a magnetic device, magnetic head for a hard disk drive, and solid-state device**

(30) Priority: 12.08.2005 JP 2005234069
(71) Applicant: FUJITSU LIMITED, Kawasaki-shi, Kanagawa 211-8588 (JP)
(72) Inventor: Noma, Kenji, Fujitsu Limited, Kawasaki-shi, Kanagawa 211-8588 (JP); Kanai, Hitoshi, Fujitsu Limited, Kawasaki-shi, Kanagawa 211-8588 (JP); Matsuoka, Masaaki, Fujitsu Limited, Kawasaki-shi, Kanagawa 211-8588 (JP)
(74) Representative: Fenlon, Christine Lesley

(57) **Abstract**

There is provided a magnetic material with a high saturation magnetization of 2.46 Teslas or above. By using this magnetic material in a recording head, it is possible to record information with a higher density on a recording medium. The magnetic material can also be applied to various kinds of solid-state devices. The magnetic material is composed of an alloy film made of iron, cobalt, and palladium, wherein a mole percentage content of palladium is set equal to 0.7% or greater but less than 1.0%, and the magnetic material is formed by dry processing.

## Description

### BACKGROUND OF THE INVENTION

### 1. Field of the Invention

The present invention relates to a magnetic film for a magnetic device with high saturation magnetization, and to a magnetic head for a hard disk drive and a solid-state device that use the same.

### 2. Background Art

To raise the recording density of a hard disk drive, it is necessary to strengthen the magnetic field produced by a magnetic head. Most magnetic heads that are currently in use are constructed with a ferromagnetic body as a magnetic pole (core), produce an induction field by having a current flow through a coil wound so as to surround the magnetic pole, and focus the induction field inside the magnetic pole so that a strong write magnetic field is radiated in one direction.

When the strength of the induction field that can be produced by the coil is treated as constant, the only way to increase the write magnetic field is to produce a head construction that raises the saturation magnetization of the magnetic pole and/or efficiently focuses the induction field.

As examples, the following materials have been proposed as high saturation magnetization materials suited to the above object: nickel-iron alloy (permalloy); an iron-aluminum-silicon alloy (sendust); amorphous alloys such as Fe-Co-Si-B; a cobalt-nickel-iron alloy; and a cobalt-iron alloy.

When recording heads for hard disk drives were first commercialized, Ni-Zn ferrite was used as the magnetic material. At that time, only magnetic tape was available as a magnetic recording medium, and Ni-Zn ferrite was used due to advantages such as its favorable abrasion resistance and corrosion resistance, as well as its high resistivity which prevents eddy currents from occurring. However, as a magnetic material, Ni-Zn ferrite has the disadvantage that the saturation magnetization is low at 0.4T (hereinafter, "T" stands for teslas).

On the other hand, although magnetic poles were manufactured at that time by machining, machining becomes increasingly difficult as the size of the head becomes smaller, and therefore Ni-Zn ferrite was replaced with metal materials such as permalloy for which photolithography can be used. Permalloy is a soft magnetic material that has been used since the 19^{th} Century, and since the corrosion resistance is relatively good and the saturation magnetization is higher than ferrite, permalloy was used after ferrite. However, since the saturation magnetization is still only 1.0T, before long the write magnetic field became insufficient, resulting in a gradual shift to materials with higher saturation magnetization.

At present, Fe₇₀Co₃₀ alloy is mainly used as the magnetic material since it has a maximum saturation magnetization of 2.45T when used alone. A material with a higher saturation magnetization than Fe₇₀Co₃₀ alloy has not been found. As one exception, experimental data about a film of the iron-nitrogen compound Fe₁₆N₂ that has a saturation magnetization of 2.8 to 3.0T has been reported (non-Patent Document 1), but at present, such values are viewed as suspicious and a value of 2.4T at most is considered more appropriate (non-Patent Document 2). This value is smaller than the saturation magnetization of 2.45T of Fe₇₀Co₃₀ alloy.

Note that as experiment data that resembles data for a magnetic film of the magnetic device according to an embodiment of the present invention, it has been reported that the saturation magnetization moment per atom of Fe or FeCo can be increased to a maximum of 10µB in a rare alloy where Fe is dispersed in Pd, a Fe/Pd multilayer film, or a FeCo/Pd multilayer film (the saturation magnetization moment per atom of Fe as a simple substance is 2.2µB, but 2.46µB for Fe₇₀Co₃₀). This is described as being caused by a phenomenon where magnetic moments increase at interfaces between the Fe atoms and the Pd atoms. However, when the entire material is considered to be a Fe-Pd alloy (or Fe-Co-Pd alloy) in the experimental data reported so far, since the percentage content of Pd is set much higher than the percentage content of Fe, the overall value for the saturation magnetization becomes extremely low, which makes such material commercially unsuited to use as a magnetic material. In addition, in either case, the high saturation magnetization was observed at around 4.2K that is the boiling point of liquid helium, and there have been no reports of the saturation magnetization moments increasing at room temperature.

It should be noted that Patent Document 1 filed by the present applicant in 2004 discloses that an alloy film including Fe, Co, and Pd exhibits superior saturation magnetization to the Fe₇₀Co₃₀ in a suitable range of composition. The document states that by forming an alloy of Pd and Fe, the magnetic moments of the Fe atoms are excited, thereby raising the overall saturation magnetization.
Non-Patent Document 1
M.Komuro et al., Journal of Applied Physics, vol.67, No.9, pp.5126 (1990)
Non-Patent Document 2
M.Takahashi et al., Journal of Applied Physics, vol.79, No.8, pp.5546 (1996)
Non-Patent Document 3
Physical Review, vol.125, No.2, pp.541 (1962)
Non-Patent Document 4
Journal of Applied Physics, vol.77, No.8, pp.3965 (1995)
Non-Patent Document 5
IEEE Transactions on Magnetism, vol.28, No.5, pp.2766 (1992)
Non-Patent Document 6
Journal of Applied Physics, vol.92, No.5, pp.2634 (2002)
Patent Document 1
Japanese Patent Application No. 2004-168502

To improve the recording density of a hard disk drive, it is effective to use a high saturation magnetization material in the magnetic head. However, as described above, the material with the highest saturation magnetization in current use is Fe₇₀Co₃₀ that has a saturation magnetization of 2.45T, with there being no known material with a higher saturation magnetization.

### SUMMARY OF THE INVENTION

Accordingly, it is desirable to provide a magnetic material with a saturation magnetization of greater than 2.46T, that is, a saturation magnetization higher than that of previously-proposed Fe₇₀Co₃₀ alloy, and can stand up to commercialization.

Accordingly, a magnetic film for a magnetic device embodying the present invention is composed of an alloy film made of iron, cobalt, and palladium and has a saturation magnetization of 2.46 Teslas or above. Another magnetic film for a magnetic device according to an embodiment of the present invention is composed of an alloy film made of iron, cobalt, and palladium, wherein a mole percentage content of palladium is set equal to or greater than 0.7% but less than 1.0%, and the magnetic film for a magnetic device is formed by dry processing. Here, in the alloy film, the ratio (C_{Fe}/C_{Co}) of the respective mole percentage contents of iron and cobalt may be in a range of 0.667 to 9.0, inclusive. Yet another magnetic film for a magnetic device according to an embodiment of the present invention is composed of an alloy film made of iron, cobalt, and palladium and has a main crystal structure that is a body-centered cubic structure.

The alloy film may be formed on an underlayer whose crystal structure is a body-centered cubic structure.

The underlayer may be composed of a metal chosen from chromium, vanadium, molybdenum, niobium, tungsten, and nickel with a body-centered cubic structure, an alloy including at least two of the metals, or an alloy produced by adding titanium or nickel to the alloy.

The alloy film may be formed using dry processing, that is, any of sputtering, vacuum deposition, and chemical vapor deposition.

A magnetic head for a hard disk drive according to an embodiment of the present invention uses a magnetic film for a magnetic device as disclosed in any of Claims 1 to 10.

A solid-state device according to an embodiment of the present invention uses a magnetic film for a magnetic device as disclosed in any of Claims 1 to 10.

The magnetic film for a magnetic device according to an embodiment of the present invention provides a magnetic film with a higher saturation magnetization than Fe₇₀Co₃₀ alloy that at 2.45T has the highest previously known magnetic material. By doing so, the magnetic film for a magnetic device can be applied in a magnetic head for a hard disk drive capable of high-density recording and a solid-state device capable of high-density recording.

### BRIEF DESCRIPTION OF THE DRAWINGS

The aforementioned will become apparent to those skilled in the art upon reading and understanding the following detailed description with reference to the accompanying drawings.

In the drawings:
FIG. 1 is a graph showing the results of measuring saturation magnetization for sputtered films where an added amount of Pd to Fe₇₀Co₃₀ is changed;
FIG. 2 is a diagram useful in explaining the construction of a magnetic head that uses a magnetic film for a magnetic device;
FIG. 3 is a diagram useful in explaining an example construction of a solid-state device; and
FIG. 4 is a diagram useful in explaining another example construction of a solid-state device.

### DESCRIPTION OF THE PREFERRED EMBODIMENTS

A magnetic film for a magnetic device according to an embodiment of the present invention, and a magnetic head for a hard disk drive and a solid-state device that use the same will now be described.

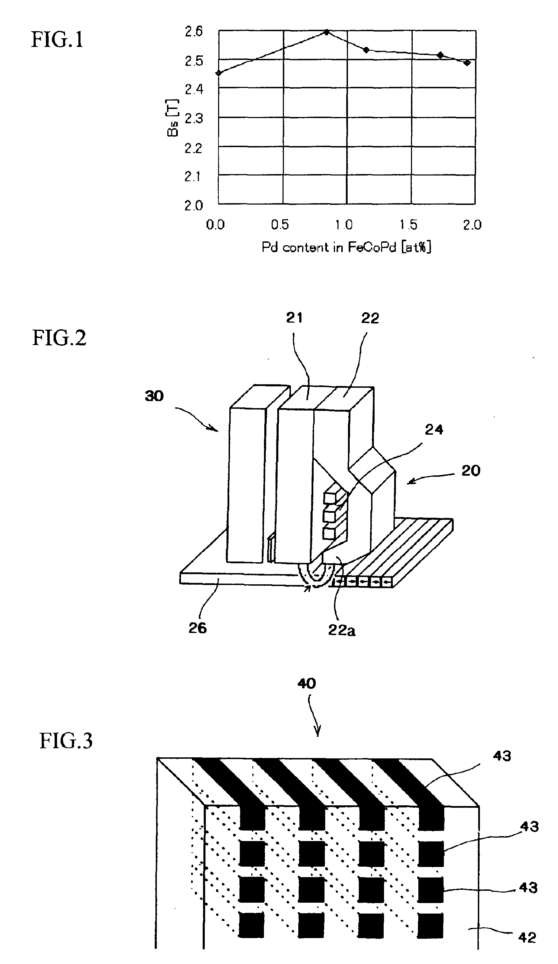

FIG. 1 shows the result of measuring saturation magnetization Bₛ for a sputtered film as a magnetic film for a magnetic device according to an embodiment of the present invention. This sputtered film was formed with a sputtered film thickness of 50nm by preparing targets with different added amounts of Pd to Fe₇₀Co₃₀ and sputtering with the sputtering conditions of 1000W and 0.4Pa. The measurement results shown in FIG. 1 show that compared to the saturation magnetization Bₛ of 2.45 of a sputtered film that does not include Pd, a sputtered film with 0.8% of added Pd has a saturation magnetization Bₛ of 2.59. The inventors found that the saturation magnetization becomes extremely high when the mole percentage content of Pd is in a range of equal to or greater than 0.7% but less than 1.0%, and in particular when the content is 0.8%.

It should be noted that since the saturation magnetization Bₛ falls when the Pd is added excessively, to produce a saturation magnetization Bₛ in excess of 2.45T for a sputtered film formed with an alloy produced by adding Pd to Fe₇₀Co₃₀ as the target, the amount of added Pd should preferably be 7% or below.

Also, in the magnetic film for a magnetic device according to the present embodiment, the ratio (C_{Fe}/C_{Co}) of the respective mole percentage contents of iron and cobalt is in a range of 0.667 to 9.0, inclusive.

In addition, in the magnetic film for a magnetic device according to the present embodiment, the main crystal structure in the film is a body-centered cubic structure.

The inventors found that the above conditions are extremely effective in realizing a high saturation magnetization. It should be noted that conversely for a film where Pd has been added excessively, for example, a film where the mole percentage content of Pd is 10%, the saturation magnetization falls remarkably due to crystals with a face-centered cubic structure being formed.

To encourage the growth of crystals with a body-centered cubic structure, the film of FeCoPd is formed on an underlayer with a suitable crystal structure. As the material of the underlayer, it is understood that it is effective to use chromium, vanadium, molybdenum, niobium, or tungsten with a body-centered cubic structure or an alloy of the same. It is also understood that to alleviate mismatching of the crystal lattice with the FeCoPd film, it is effective to add titanium and/or nickel to the underlayer, with a chromium-nickel alloy with suitable relative proportions being especially effective.

For the FeCoPd film that is a magnetic film for a magnetic device according to the present embodiment, the increase in saturation magnetization Bₛ shown in FIG. 1 cannot be explained merely by the increase in the saturation magnetization moment µB caused by a rare metal alloy where Fe is dispersed in Pd. In the magnetic film for a magnetic device according to the present embodiment, it is assumed that the Pd replaces lattice points in the FeCo crystals or infiltrates spaces within the lattice, thereby extending the crystal lattice of the FeCo and changing the electronic state.

It should be noted that dry processing methods are suitable as the method of forming the magnetic film for a magnetic device according to an embodiment of the present invention. Aside from the sputtering described above, the dry processing methods referred to here include vacuum deposition, chemical vapor deposition, or equivalent methods.

When sputtering is used, by suitably adjusting the composition of the target used as the base material, it is easy to control the mole percentage content of palladium in the film to the order of 0.1%. If a target composed of iron, cobalt, and palladium is formed in advance as an alloy with a predetermined mole percentage content of palladium, the composition of palladium in the sputtered film will be determined by the composition of palladium in the target, and therefore the palladium can be precisely controlled to the predetermined mole percentage content. There is also the advantage that there are no fluctuations in the mole percentage content of palladium in the sputtered film throughout the sputtering process operation.

Also, when vacuum deposition is used, by setting the composition of palladium in the film via the composition of palladium in the deposition source, it is possible to precisely control the mole percentage content of the palladium to a predetermined amount.

Also, when chemical vapor deposition is used, by controlling the flow amount of organometal conveyed into a reaction chamber, it is possible to precisely control the composition of palladium in the film to a predetermined mole percentage content.

It should be noted that although plating methods are usually used at present to produce a magnetic film used as a magnetic pole of a recording head for a hard disk drive, plating is unsuited to forming the magnetic film according to an embodiment of the present invention. The magnetic film used as the magnetic pole has a thickness in a range of several hundred nm to several µm, and when a plating method is used, the composition of the FeCoPd film is susceptible to varying between the start and end of application. This is because the ionization tendency decreases in the order Fe>Co>>Pd>Au>Pt, and therefore when an alloy is fabricated from Fe and Co, Pd tends to be deposited first, resulting in the ratio of the amounts of Fe, Co, and Pd ions changing in the plating bath at the start and end of application of the film. To prevent this from happening, it is necessary to mix in an additive such as saccharin, which lowers the saturation magnetization of the produced film. Although it is necessary to carry out precise control of the percentage amount of Pd to obtain a high saturation magnetization in excess of 2.45T, it can be said that plating methods are not suited to such control.

Since the magnetic film for a magnetic device described above has a high saturation magnetization, the magnetic film for a magnetic device can be favorably used in a magnetic head for a hard disk drive, a solid-state device, or the like.

FIG. 2 shows an example structure of a magnetic head for a hard disk drive 30. The magnetic head 30 shown in FIG. 2 is an example constructed for "in-plane recording", includes a lower magnetic pole 21 and an upper magnetic pole 22 as a magnetic head part 20, and has a coil 24 disposed so as to be interlinked to a core part 22a.

The magnetic head 30 is produced by forming the lower magnetic pole 21 that composes the magnetic head part 20 using an alloy film formed by sputtering the Fe₇₀Co₃₀ described above to which Pd has been added with a mole percentage content of equal to or greater than 0.7% but less than 1.0% (more favorably, around 0.8%).

Since the magnetic film for a magnetic device according to an embodiment of the present invention has a saturation magnetization of 2.46T or higher that is superior to Fe₇₀Co₃₀ alloy that is the most common core magnetic pole material in previous use, by using the lower magnetic pole 21, it is possible to effectively improve the write magnetic field strength, and therefore it becomes possible to increase the write density on a recording medium 26.

It should be obvious that aside from use as the lower magnetic pole 21 of the magnetic head 30, the magnetic film for a magnetic device according to an embodiment of the present invention can be used as a magnetic pole material that composes the upper magnetic pole 22.

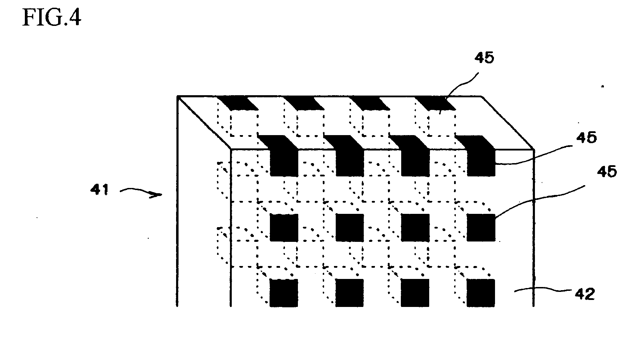

FIGS. 3 and 4 show examples where the magnetic film for a magnetic device according to embodiments of the present invention is used in solid-state devices. In more detail, FIG. 3 shows a solid-state device 40 where quantum wires 43 composed of iron-cobalt in the form of thin wires are arranged at predetermined intervals on a base part 42 composed of palladium. FIG. 4 shows a solid-state device 41 where quantum dots 45 composed of iron-cobalt in the form of dots are arranged at predetermined intervals on a base part 42 composed of palladium. These solid-state devices 40, 41 can be produced by forming an alloy film by adding Pd with a mole percentage content of equal to or greater than 0.7% but less than 1.0% (more favorably, around 0.8%) to Fe₇₀Co₃₀ and sputtering.

The solid-state devices 40, 41 shown in FIGS. 3 and 4 can be used as devices for magnetic recording, and in particular by including the construction of the magnetic film for a magnetic device 10 described above, since an extremely high saturation magnetization can be achieved, the solid-state devices 40, 41 can be used effectively for recording information with high density. In particular, it is believed that the saturation magnetization per unit volume of the magnetic body will increase in keeping with the extent to which a dot construction such as the solid-state device 41 shown in FIG. 4 is used.

## Claims

1. A magnetic film for a magnetic device that is composed of an alloy film made of iron, cobalt, and palladium, is formed by dry processing, and has a saturation magnetization of 2.46 teslas or above.

2. A magnetic film for a magnetic device that is composed of an alloy film made of iron, cobalt, and palladium, wherein a mole percentage content of palladium is equal to or greater than 0.7% but less than 1.0%, and the magnetic film for a magnetic device is formed by dry processing.

3. A magnetic film for a magnetic device according to Claim 2, wherein a ratio (C_{Fe}/C_{Co}) of respective mole percentage contents of iron and cobalt is in a range of 0.667 to 9.0, inclusive.

4. A magnetic film for a magnetic device according to Claim 2 or 3, wherein a main crystal structure of the alloy film is a body-centered cubic structure.

5. A magnetic film for a magnetic device according to Claim 2, 3 or 4, wherein the alloy film is formed on an underlayer whose crystal structure is a body-centered cubic structure.

6. A magnetic film for a magnetic device according to Claim 5, wherein the underlayer is composed of a metal chosen from chromium, vanadium, molybdenum, niobium, tungsten, and nickel with a body-centered cubic structure, an alloy including at least two of the metals, or an alloy produced by adding titanium or nickel to the alloy.

7. A magnetic film for a magnetic device according to any preceding Claim, wherein sputtering is used as the dry processing.

8. A magnetic film for a magnetic device according to any preceding Claims, wherein vacuum deposition is used as the dry processing.

9. A magnetic film for a magnetic device according to any preceding Claims, wherein chemical vapor deposition is used as the dry processing.

10. A magnetic head for a hard disk drive that uses the magnetic film for a magnetic device according to any one of Claims 2 to 9.

11. A solid-state device that uses the magnetic film for a magnetic device according to any one of Claims 2 to 9.

12. A magnetic film for a magnetic device that is composed of an alloy film made of iron, cobalt, and palladium, has a main crystal structure that is a body-centered cubic structure, and is formed by dry processing.

13. A magnetic film for a magnetic device according to Claim 12, wherein the alloy film is formed on an underlayer whose crystal structure is a body-centered cubic structure.

14. A magnetic film for a magnetic device according to Claim 13, wherein the underlayer is composed of a metal chosen from chromium, vanadium, molybdenum, niobium, tungsten, and nickel with a body-centered cubic structure, an alloy including at least two of the metals, or an alloy produced by adding titanium or nickel to the alloy.

15. A magnetic film for a magnetic device according to Claim 12, 13 or 14, wherein sputtering is used as the dry processing.

16. A magnetic film for a magnetic device according to Claim 12, 13 or 14, wherein vacuum deposition is used as the dry processing.

17. A magnetic film for a magnetic device according to Claim 12, 13 or 14, wherein chemical vapor deposition is used as the dry processing.

18. A magnetic head for a hard disk drive that uses the magnetic film for a magnetic device according to any one of Claims 12 to 17.

19. A solid-state device that uses the magnetic film for a magnetic device according to any one of Claims 12 to 17.
